# EUROPEAN PATENT SPECIFICATION

(11) **EP 4 326 798 B1**
(45) Date of publication and mention of the grant of the patent: **09.12.2026**
(21) Application number: 22726313.4
(22) Date of filing: 20.04.2022
(51) Int. Cl.: C08G 59/50, C08G 59/66, C08K 5/103

(54) **HARDENING COMPOSITION**
HÄRTUNGSZUSAMMENSETZUNG
COMPOSITION DE DURCISSEMENT

(30) Priority: 20.04.2021 IT 202100010049
(43) Date of publication of application: 28.02.2024
(73) Proprietor: Tenax S.P.A., 37020 Dolcè - Frazione Volargne (VR) (IT)
(72) Inventor: SOLITO, Marcello, 37020 DOLCE' (IT)
(74) Representative: Petraz, Davide Luigi
(86) International application number: PCT/IT2022/050105
(87) International publication number: WO 2022/224288

(56) References cited:
- JP-A- 2006 045 406
- US-B2- 9 580 633

## Description

### FIELD OF THE INVENTION

The present invention concerns a hardening composition, usable for example for the treatment of stone material, in particular of rough surfaces of stone material, with an impregnating and/or reinforcing purpose, and/or for filling holes, cracks or fissures. Furthermore, the composition described here can also be used to produce parts of tools for working or treating said stone materials, for example for grinding or polishing.

### BACKGROUND OF THE INVENTION

Resin-based compositions are known for treating the rough surfaces of stone material, in particular used for decoration or furnishing of external or internal spaces, generally with an impregnating and/or reinforcing purpose and/or for filling holes, cracks or fissures.

The resins for this type of application are generally in liquid form, so that they can be applied homogeneously on the stone material and are subsequently treated to harden and thus carry out their protective and consolidating/reinforcing action.

Hardening is allowed by the polymeric nature of the compounds based on which the resins are prepared. Depending on the nature of the polymeric compounds used, different hardening mechanisms are involved and, therefore, different triggers of the hardening reaction.

Among the known products there are resins which harden by treatment with radiation, usually UV light, intended to trigger a mechanism of radical polymerization of monomers or oligomers contained in the resin. It is also said UV photocatalysis. Photo-initiators are compounds that produce radicals when exposed to UV light. Some commercial names of widely used photo-initiators are: IRGACURE184, IRGACURE651, IRGACURE819, IRGACURE1173.

Typically, UV photocatalysis is performed with acrylic, methacrylic and vinyl resins and monomers that are photo-activated by the addition of particular additives called photo-initiators. These polymers are particularly hard with very high vitreous transition temperatures. These polymers are also very bright with very low solar yellowing. In general, given their speed of catalysis, they do not give particularly good values of adhesion and penetration.

UV photocatalysis brings several advantages, for example it allows to regulate, in the initial application phase, the permanence of the liquid resin for a desired time, in order to allow a high or low penetration into the stone material, and a consequent high or low toning of the stone. UV photocatalysis is also very fast, which allows to greatly accelerate production times and to reduce the wet or greasy effect. Furthermore, since the application of heat is not necessary for hardening purposes, the resin subjected to UV catalysis is not affected by a reduction in viscosity, reducing or eliminating unwanted darkening effects.

One disadvantage of UV photocatalysis is that it is not possible to cross-link the resin which is located in places or zones of the surface to be treated where light does not reach. Furthermore, as stated, the high speed with which the catalysis is completed does not give particularly good results in terms of adhesion and penetration.

Another known type of hardening trigger is by heat, also called thermal catalysis of two-component systems. These systems can have polyester resins in styrene with a suitable organic peroxide as activator, or of classic two-component epoxy resins, in particular epoxy resins and diluents that are combined at the time of use with a hardening component, for example of the diamine type. With these products, a temperature just above room temperature, for example in the range of 35°C, may be sufficient to obtain the hardening reaction.

US-B-9580633 shows a state-of-the-art hardening composition of the latter type, comprising an epoxy resin, an unsaturated compound which can be a vinyl or a methacrylate, at least one amine and a peroxide, specifically di-benzoyl peroxide. The peroxide is used as an initiator and hardening compound, and the hardening reaction is triggered by heating; no other type of activation of the hardening reaction is provided, in particular activation by exposure to UV rays. Aside from peroxide, no other type of compound is provided to act as an initiator.

JP-A-2006045406 also shows a hardening composition as indicated above and which is not intended for treating stone material but for the production of articles in fiber-reinforced plastic.

Neither of these known documents mentions the involvement of an aza-Michael addition reaction in the chemical reactions that lead to the hardening of the composition.

One disadvantage of two-component thermosetting epoxy resins is that the cross-linking and processing times are longer than UV photocatalysis times. Furthermore, the surface hardness obtained with thermosetting resins is generally lower than that obtainable with UV photocatalysis hardening resins. In the case of two-component systems with polyester resins in styrene with an organic peroxide activator, there is also a problem of low adhesion on the stone material due to the large amount of shrinkage during catalysis, typical of these resins. There is also a health problem due to the styrene solvent, in particular during the steps of application and disposal of the fumes.

There is therefore a need to perfect a composition which can overcome at least one of the disadvantages of the state of the art.

In particular, one purpose of the present invention is to provide a resin-type composition which, once applied on a surface to be treated, can be hardened even in zones of the surface that cannot be reached by light and which at the same time entails fast cross-linking or polymerization reactions.

Another purpose of the present invention is to provide a resin-type composition which can have a very high hardness, even higher than known resins.

Another purpose of the present invention is to provide a resin which is durably very resistant from a chemical point of view, but also from a mechanical point of view, and in particular resistant to bad weather.

Another purpose is to perfect a method for making the above composition.

Another purpose is to provide a tool for treating or working surfaces of stone material which has a more effective working of stone materials than known tools.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, the Applicant has developed a composition, of the resin type, which overcomes the limits of the state of the art and eliminates the defects present therein.

In accordance with some embodiments, there is provided a hardening composition comprising an epoxy resin, an unsaturated organic compound and a hardening compound able to react with the epoxy resin and with the unsaturated organic compound. The unsaturated organic compound is selected from acrylic, methacrylic and vinyl compounds containing one or more unsaturated bonds between two carbon atoms. The unsaturated organic compound can be selected from resins or oligomers. The hardening compound is a nucleophilic compound, preferably an amino compound, in particular selected from monoamines, diamines, triamines and multifunctional amines, that is, amines with more than three amino functions. The amines can be either cycloaliphatic, aliphatic, or aromatic which contain primary, secondary and tertiary hydrogens. More preferably, the hardening compound is a diamine, for example 1,3-bis(aminomethyl)cyclohexane 1,3BAC. The hardening compound can also be selected from thiols and mercaptans with primary and secondary hydrogens. Advantageously, by epoxy resin we mean all resins, polymers, oligomers, monomers and/or substances that contain within them one or more epoxy rings reactive to the polyaddition reaction, also called oxirane rings.

Favorably, the composition also comprises a photo-initiator suitable to make the composition reactive to UV light. By photo-initiator it is meant a substance which, when exposed to photonic rays, in particular UV rays, generates a chemical species that activates polymerization reactions, in particular a very reactive chemical species such as, for example, a radical species. The photo-initiator can be of the radical or ionic (cationic or anionic) type. By UV light we mean the light rays with a wavelength comprised in the UV range, indifferently UV-A, UV-B, UV-C and UV-V, and which can be produced with UV lamps with an iron, mercury, gallium bulb, or bulbs of other similar materials or even with new generation LED lamps and bulbs. The photo-initiator can be added indiscriminately to the epoxy resin, in which the unsaturated organic compound is included, or to the hardening compound.

Due to the presence of both the epoxy resin and also of the unsaturated compound, the composition according to the invention, which is in liquid form, can be hardened both by means of UV photocatalysis and by means of thermal catalysis. This allows to obtain the advantages of both hardening mechanisms.

The composition according to the present invention also has the advantage of involving three different hardening modes ("triple-cure"), instead of two as already known in the state of the art.

In fact, in addition to hardening by means of radical cross-linking (UV photocatalysis) and hardening by means of poly-addition (thermal catalysis), a Michael addition also occurs between the unsaturated compound, in particular of the acrylic, methacrylic or vinyl type, and the nucleophilic hardening compound, which act as Michael's acceptor and Michael's donor, respectively. Michael's addition occurs as soon as they are put in the presence of each other, spontaneously and quickly.

By providing a diamine as a nucleophilic compound, a particularly fast and effective Michael addition is obtained, also known as a "click" reaction. The unsaturated compound is more preferentially an acrylic or methacrylic compound, which are better Michael acceptors than a vinyl compound. Even more preferentially, the unsaturated compound is an acrylic compound.

It is preferable to provide that the unsaturated compound has more than one acrylic, methacrylic or vinyl function, that is, more than one double bond between two carbon atoms. More preferably, the unsaturated compound has three functions with double bond, that is, each unsaturated compound molecule has three functions with double bond between two carbon atoms. An example of such a compound is trimethylolpropane triacrylate TMPTA, which comprises three acrylic functions.

The combination of the three hardening mechanisms, namely Michael's addition, radical cross-linking and poly-addition, allows to obtain a resin with mechanical properties, in particular final hardness, which are better than known resins. The resins according to the present invention have a hardness such as to make them particularly suitable to treat stone material, in particular stones which are intended to remain outdoors.

Since the hardening compound is involved in all three resin hardening mechanisms, it should be provided that it is in excess with respect to the epoxy compound and the unsaturated compound.

In accordance with some embodiments, the total quantity of hardening compound is the sum of a first quantity destined to react with the unsaturated compound in the aza-Michael addition, and a second quantity destined to react with the epoxy resin in the poly-addition.

Preferably, the first quantity of hardening compound is such that the proportion in quantity of matter (unsaturated compound):(hardening compound) is comprised between 1:0.5 and 1:2.5. More preferably, the proportion in quantity of matter (unsaturated compound):(hardening compound) is comprised between 1:1 and 1:2.

Advantageously, the second quantity of compound is such that the proportion in quantity of matter (epoxy polymer):(hardening compound) is comprised between 4:1 and 1:1. More advantageously, the proportion in quantity of matter (epoxy polymer):(hardening compound) is comprised between 2.5:1 and 1.5:1

The composition can be in the form of a two-component resin, with the unsaturated compound dissolved and diluted in the epoxy resin and the hardening compound supplied separately, to be mixed with the resin when the hardening is to be performed. The composition can be made commercially available in a kit comprising the epoxy resin and the unsaturated compound mixed together, while the hardening compound is supplied separately. With the expression "supplied separately" it is meant that the hardening compound is supplied in a form not mixed with the resin and the unsaturated compound, but ready to be mixed with them in order to initiate the hardening of the composition. For example, the hardening compound can be supplied in a separate packaging, or in the same packaging as the other compounds, as long as it is properly isolated from them.

By developing the composition as above, the Applicant has also discovered that, surprisingly, it can be used as a component to make parts of tools for working stone materials, for example tools for polishing or grinding stones.

In this application, the composition described here is mixed with inert mineral fillers, which can be of the type commonly used in known tools. Such inert mineral fillers can be, for example, oxides of inert metals, diamonds, carbides. The high speed of the Michael addition reaction, and in general of the hardening of the resin, is particularly advantageous in this application, since it allows to prevent the sedimentation of the inert fillers.

The regular distribution of the inert fillers, combined with the very nature of the hardened composition, which acts as a binder, means that the tool obtained interacts particularly well with the stone material, which is worked more effectively and quickly compared to known tools.

It has been found that the best results are obtained with a blend in which the composition described here is present between 5% and 40% by weight.

According to one aspect, there is also provided a method for hardening a composition, comprising the steps of making available an epoxy resin in which an unsaturated compound is included, and mixing the resin with a hardening component. By the term "included" we mean that the unsaturated compound is dissolved, or diluted, in the epoxy resin. Subsequently, the method provides to subject the mixture obtained to a treatment with UV light. Finally, the mixture is subjected to a step of thermal catalysis, so that hardening of the epoxy resin involves three different hardening modes. catalysis. The step of thermal catalysis can be an active heating step, in which the temperature of the mixture is raised above ambient temperature; or the step of thermal catalysis can occur at ambient temperature, that is, at the temperature at which the mixture as above is prepared, without necessarily supplying heat by heating. The thermal catalysis can occur through heat transfer by means of thermo-ventilation ovens or by means of infrared radiation plates, both electric and also gas, or by means of microwave ovens where the heating occurs through a magnetron or similar equipment suitable to obtain heating by means of vibration of molecules or dipoles contained in the resin and in the stone or ceramic that makes up the equipment itself.

### DESCRIPTION OF SOME EMBODIMENTS

We will now refer in detail to the possible embodiments of the invention, by way of a non-limiting example. The phraseology and terminology used here is also for the purposes of providing non-limiting examples.

Unless otherwise defined, all the technical and scientific terms used here and hereafter have the same meaning as commonly understood by a person with ordinary experience in the field of the art to which the present invention belongs. Even if methods and materials similar or equivalent to those described here can be used in practice and in the trials of the present invention, the methods and materials are described hereafter as an example. In the event of conflict, the present application shall prevail, including its definitions. The materials, methods and examples have a purely illustrative purpose and shall not be understood restrictively.

All measurements are carried out, unless otherwise indicated, at 25°C (ambient temperature) and at atmospheric pressure. All temperatures, unless otherwise indicated, are expressed in degrees Celsius.

All percentages and ratios indicated shall be understood to refer to the weight of the total composition (w/w), unless otherwise indicated.

All the percentage intervals reported here are provided with the provision that the sum with respect to the overall composition is 100%, unless otherwise indicated.

All the intervals reported here shall be understood to include the extremes, including those that report an interval "between" two values, unless otherwise indicated.

The present description also includes the intervals that derive from overlapping or uniting two or more intervals described, unless otherwise indicated.

The present description also includes the intervals that can derive from the combination of two or more values taken at different points, unless otherwise indicated.

By water, it is meant distilled water, unless otherwise specified.

In the context of the present application, the quantity of matter shall be understood as the quantity of substance, also called chemical quantity, and is expressed in moles. As well known by the person of skill in the art, the quantity of matter is obtained with the mass/(molecular mass) ratio of a same chemical compound.

The resin composition according to the invention comprises an epoxy resin in which there is diluted an unsaturated organic monomer compound, selected from vinyl compounds, acrylic compounds and methacrylic compounds. The preferred vinyl compounds have an electron donor group connected to one of the two carbons. Acrylic and methacrylic compounds are preferred, since they have a carboxyl COOH or ester COOR group which has good electron donor properties.

By epoxy resin we mean, advantageously, the standard liquid epoxy resins from bis-phenol-A and bis-phenol-F, with EEW of 180-190 and viscosity between 3000-15000 cps at 25°C. It is also possible to use epoxy resins from bis-phenol-A and bis-phenol-F with EEW greater or lower than 180-190, to use epoxy resins with lower viscosity or even higher viscosity until they become solid or semi-solid resins with average molecular weights Mw that are lower than 700 g/mol, between 700 and 1000 g/mol, and greater than 1000 g/mol. It is also conveniently meant all epoxy derivatives called reactive plasticizers and/or reactive diluents with 1, 2, 3, 4, 5, 6, 7, 8 epoxy functions. It is also possible to use resins called epoxy-phenolic and epoxy novolac resins, with one or more functionalities. All resins, polymers, oligomers, monomers and/or substances that contain within them epoxy rings (oxirane ring) reactive to the polyaddition reaction are included. It is also possible to use monomers, dimers and hybrid resins with double functionality which contain both the unsaturated part and also the epoxy part, such as for example glycerol dimethacrylate (GDMA) and glycidyl methacrylate (GMA).

The composition also comprises a hardening compound suitable to react with the epoxy resin and with the unsaturated compound. In particular, the hardening compound is a nucleophilic compound and has one or more active hydrogens to react with the epoxy resin through a poly-addition, under heating. Please note that heating must not provide very high temperatures, for example, temperatures below 100°C, of the order of 50°C or even 35°C, will suffice.

A class of compounds particularly suitable for the hardening compound is that of amino compounds, including mono-, di-, triamines and amines with more than three amino functions, also called multifunctional amines. Examples of amines that can be used are 1,3-bis(aminomethyl)cyclohexane 1,3BAC, hexamethylenediamine HMDA, tris(2-aminoethyl)amine TAEA and poly(propylene imine) dendrimers PPI, for example first and second generation.

Among the amine compounds, diamines are preferred since they have both nucleophilic properties and also several hydrogen atoms suitable to participate in the poly-addition reaction with the epoxy resin. For this purpose, it is preferable that both amino functions are primary amines. Furthermore, the diamines react very well in the context of the aza-Michael addition, allowing the reaction to occur very quickly and very effectively. With this reaction, the total or near total consumption of the unsaturated compound can occur in a few minutes, for example five minutes or fewer.

Thiols and mercaptans which contain primary and secondary hydrogens are also suitable as a hardening compound. By primary and secondary hydrogens it is meant hydrogens bonded respectively to a primary carbon and to a secondary carbon.

The aza-Michael addition is further promoted if the unsaturated compound has more functions with a double bond between two carbon atoms, since these represent the precise point with which the hardening compound interacts. The increase in the number of functions also promotes a better hardness of the resin after subsequent treatments. In fact, it has been verified that the hardest resins have been obtained with trifunctional unsaturated compounds, that is, provided with three C=C functions.

The reaction results in the formation of an adduct between the unsaturated compound and the hardening compound. In the event that the hardener is a diamine, it should be noted that each of the two amino functions still has at least one hydrogen atom available for the subsequent poly-addition with the epoxy resin.

The quantity of matter, in terms of moles, of the hardening compound is advantageously such as to react both with the unsaturated compound and also with the epoxy resin. Once the aza-Michael addition reaction is over, part of the quantity of hardening compound is still available to react with the epoxy resin. To ensure a sufficient quantity of hardening compound after the aza-Michael addition reaction, it is suitable to provide an excess of hardening compound, at least with respect to the quantity of epoxy resin.

The proportion, in quantity of matter, between the epoxy polymer and the unsaturated compound is advantageously comprised between 2:1 and 1:2, preferably between 1.5:1 and 1:1.5. In this way, there is a good compromise between the hardness due to the cross-linking by means of UV photocatalysis of the adduct between the unsaturated compound and the hardening compound, and the hardness due to the poly-addition with thermal catalysis of the epoxy polymer with the hardening compound.

Taking a diamine as an example of a hardening compound, knowing that it potentially bonds with four molecules of epoxy polymer, a proportion of quantity of matter of epoxy polymer:diamine equal to 2:1 (mol/mol) can be provided. To this quantity there is added an additional quantity of diamine, intended to react with the unsaturated compound. The quantity of diamine is determined on the basis of the proportion unsaturated compound:diamine to be obtained.

One mode of use of the composition provides to supply it in two separate components, with the epoxy resin and the unsaturated compound on one side, the unsaturated compound being dissolved and diluted in the epoxy resin, and the hardening compound on the other. In this way, the unsaturated compound and the hardening compound are prevented from reacting with each other prematurely.

When using the composition for its hardening, the hardening compound is mixed into the resin. This immediately determines the initiation of the aza-Michael addition reaction between the unsaturated compound and the hardening compound, which also involves the development of heat. The Michael addition results in the formation of an adduct.

Subsequently, it is provided to expose the composition to a UV light in order to activate the radical cross-linking of the unsaturated compound, catalyzed by the UVs. For this purpose, the composition also advantageously comprises a photo-initiator, which can be a compound containing at least one benzoyl group, such as benzophenone, hydroxycyclohexyl phenyl ketone or dimethoxy-1,2-diphenylethan-1-one. The carbonyl group of the initiator absorbs a photon and transforms into an excited state. The subsequent homolytic cleavage of the excited α-carbon bond produces two radical fragments.

The radical cross-linking is also almost instantaneous. This reaction, which involves the C=C double bonds of the unsaturated compound, causes these bonds to no longer be available for the aza-Michael addition, which determines the arrest thereof.

At this point, in the resin there are molecules of epoxy polymer, molecules of adduct and molecules of hardening compound, which has been introduced in excess with respect to the quantity of unsaturated compound. Given the efficiency and yield of the aza-Michael addition, the unsaturated compound has been consumed entirely, or almost entirely.

As mentioned above, the time for the Michael addition reaction is very short, and the step of exposure to UV light can be performed a few minutes after mixing the hardening compound with the resin, for example five minutes or fewer.

It is then provided to apply heat to the composition, in order to initiate the poly-addition between the hardening compound and the epoxy polymer, but also between the adduct (which entails active hydrogen atoms available for this reaction) and the epoxy polymer. This concludes the hardening of the resin.

The composition itself, due to its hardening capacity, is well suited for use in the treatment of stone material. To do this, it can be provided to spread the composition after the hardening compound has been mixed in the resin, but before exposure to UV light. Please note that following the Michael addition the composition remains liquid, or in any case spreadable, and has not hardened.

The composition can also be used to make parts of tools for working stones, in particular for polishing stones.

For this purpose, the composition is mixed with the inert mineral and/or metal fillers and acts as a binder. In particular, the inert fillers, which can comprise for example metal oxides, aluminum oxides, diamonds, carbides or inert metals, have to be mixed with the epoxy resin, in which the unsaturated compound is also present, preferably before mixing the hardening compound, which determines the initiation of the aza-Michael addition reaction, and in any case before exposure of the composition to UV light.

The radical cross-linking catalyzed by the UV light determines a very fast hardening of the composition, and allows to prevent a migration of the inert fillers due to the effect of gravity, to the advantage of a better homogeneity of the latter.

It is possible to make a tool for working stone materials which comprises at least a working part, suitable to come into contact with the stone material and consisting of the mixture of composition according to the present invention with inert fillers. The composition is obviously hardened, and acts as a binder for the inert fillers.

### EXAMPLE 1

In this example, the unsaturated compound is trimethylolpropane triacrylate TMPTA (with a molar mass equal to 296.32 g/mol), an acrylate compound with three acrylic functions, to which there is added a mixture of trimethylbenzoyl diphenylphosphine oxide (TPO) and α-hydroxyketones with benzophenone derivatives, known by the trade name Esacure Kto46, at 0.5% by weight with respect to the TMPTA, which performs the function of photo-initiator. The hardening compound is the diamine 1,3-bis(aminomethyl)cyclohexane 1,3BAC (molar mass equal to 142.24 g/mol). The epoxy resin is a standard epoxy resin with EEW equal to 190, based on an epoxy polymer with a molecular mass of 380.00 g/mol.

The composition was prepared with a resin with 60% of epoxy polymer and 40% of TMPTA (which corresponds to a proportion epoxy:TMPTA in terms of quantity of matter equal to about 1.2:1), and with different quantities of diamine, so as to vary the proportion (of matter) TMPTA:1,3BAC (mol:mol). More precisely, the total mass of diamine was determined by considering a first quantity equal to 1 mole of 1,3BAC for 2 moles of epoxy polymer, and a second quantity equal to a variable quantity of 1,3BAC for each mole of TMPTA. The total quantity of diamine added to the resin is the sum of the first quantity and second quantity as above.

The different compositions prepared are indicated in table 1:

| | Diamine weight for 100g of resin (g) | | | Proportions (in quantity of matter) | |
|---|---|---|---|---|---|
| | for the reaction with the epoxy polymer | for the reaction with TMPTA | total | epoxy: 1,3BAC | acrylate: 1,3BAC |
| A | 11.2 | 57.6 | 68.8 | 2:1 | 1:3 |
| B | 11.2 | 38.4 | 49.6 | 2:1 | 1:2 |
| C | 11.2 | 28.8 | 40.0 | 2:1 | 1:1.5 |
| D | 11.2 | 19.2 | 30.4 | 2:1 | 1:1 |

Samples A, B, C and D were prepared following the proportions indicated in the table. First, the resin is prepared by mixing the epoxy polymer and the acrylate at 50°C under continuous stirring, by means of a magnetic stirrer, for 120 minutes. The resin thus obtained is left to stand overnight at ambient temperature.

The predetermined quantity of 1,3BAC, as per the table above, is added to each of the samples. With each of the samples, resin disks 5mm high and 85mm in diameter, weighing 40g each, are prepared by pouring the resin + 1,3BAC mixture into special metal plates.

The discs are exposed to an iron UV lamp, 1500watt power, for 40 seconds, and are then placed in a thermo-ventilated oven at 50°C for 12 hours. After the heat treatment the discs are left to rest for 24 hours at ambient temperature.

The SHORE D hardness of the discs was measured with a digital hardness tester from the company AFFRI, at 25°C and at 50°C. The results are shown in table 2 below.

| Sample | SHORE D at 25°C | SHORE D at 50°C |
|---|---|---|
| A | 71 | 28 |
| B | 80 | 41 |
| C | 77 | 74 |
| D | 79 | 81 |

We must clarify that a SHORE D value lower than 70 is considered unacceptable, in particular for an application on stone material.

Results show that all the tested samples have an acceptable hardness at 25°C, but that only the samples in which the proportion TMPTA:1,3BAC is 1:1.5 (sample C) and 1:1 (sample D) have an acceptable hardness also at 50°C. In particular, sample D has greater hardness than sample C, both at 25°C and also at 50°C.

From the point of view of the aza-Michael addition reaction, we must clarify that TMPTA and 1,3BAC add to form an adduct, which therefore still has two C=C functions available for another addition. However, it has been observed that other additions on the adducts are negligible in the results, because the decrease in functions available for the addition, together with the additional encumbrance due to the structure of the adduct, determine a significant lowering of its reactivity toward diamine.

### EXAMPLE 2

In order to evaluate the persistence of the hardness characteristics over time, samples C and D were subjected to accelerated aging for 15 days, in a Qsun Xenon test chamber model Xe-3-HCS climatic cell, according to the ASTM-D904 standard. The treatment cycles for the accelerated aging are specified in the following table:

| **Phase** | **Power (W/m²)** | **Panel temperature (°C)** | **Chamber temperature (°C)** | **RH(%)** | **Duration (minutes)** |
|---|---|---|---|---|---|
| 1: Light | 0.51 | 63 | 38 | 50 | 40 |
| 2: Light + spray | 0.51 | 63 | 38 | // | 20 |
| 3: Light | 0.51 | 63 | 38 | 50 | 60 |
| 4: Darkness | 0.00 | // | 38 | 95 | 60 |

At the end of the aging treatment, sample C was found to be partly dissolved, while sample D did not undergo any structural variation, except for the color, which turned yellow. This yellowing is typical of this type of resins.

### EXAMPLE 3

The influence of exposure to UV light was evaluated with a first sample in which the hardener is 1,3BAC at 35g per 100g of resin referred to in the previous examples, that is, comprising 60% of epoxy resin and 40% of TMPTA to which there is added Esacure Kto46 at 0.5% by weight of the weight of the TMPTA, and with a second sample in which the hardener comprises IPD (isophorone diamine) and is 25g per 100g of resin. For each of these examples, a first sample was subjected to a UV treatment and then to a heat treatment at 50°C, while a second sample was subjected only to the heat treatment. The samples were prepared in the same form as example 1, that is, in the form of discs of 85mm in diameter by 5mm in height. The results are shown in table 3 below:

| Sample | UV exposure | Appearance before heat treatment | SHORE D hardness after 45 min at 50 °C | SHORE D hardness after 2 hours at 50 °C | SHORE D hardness after 7 hours at 50 °C |
|---|---|---|---|---|---|
| E (100g resin + 35g 1,3BAC) | YES | Resin in very advanced | 81 | 87 | 88 |
| | | gel, not workable | | | |
| | NO | liquid | 77 | 86 | 86 |
| F (100g resin + 25g IPD) | YES | plastic disk, greasy on the surface | plastic, greasy on the surface | 81 | 84 |
| | NO | liquid | stringy, spreadable gel | stringy gel | rubbery |

The results show that, in the case of the 1,3BAC, the UV photocatalysis allows to reach higher hardnesses faster than in the absence of UV photocatalysis. In the case of the IPD, however, the photocatalysis is necessary to obtain the hardening of the sample.

### EXAMPLE 4

In this example, the tests were performed on a composition comprising the unsaturated compound and the hardening compound.

In particular, the tested composition provides a TMPTA-based resin, therefore acrylic, and the 1,3BAC as a hardening compound, to both of which there was added Esacure Kto46 at 0.5% by weight on the weight of the TMPTA as photo-initiator.

Three different samples were prepared, with three different proportions between TMPTA and 1,3BAC. For each of such samples, a first specimen was subjected to exposure to UV light and to heating, while a second specimen was subjected to heating only.

The samples were produced as indicated in example 1, and the treatment methods are the same as in example 1, with the exception of an additional post-curing phase, after the heat treatment, also at 50°C for 12 hours. The results obtained are shown in table 4 below:

| Sample (proportion TMPTA: 1,3BAC mol:mol) | UV treatment | Appearance after UV treat. | 30 min heat treat. | 120 min heat treat. | 240 min heat treat. | 12 hour post treat. |
|---|---|---|---|---|---|---|
| G (1:3) | Yes | liquid | viscous liquid | viscous liquid | viscous liquid | viscous gelatin |
| | No | liquid | viscous liquid | viscous liquid | viscous liquid | viscous gelatin |
| H (1:2) | Yes | rubbery | very rubbery | very rubbery | 30 SHORE A | 68 SHORE A |
| | No | rubbery | very rubbery | very rubbery | 28 SHORE A | 69 SHORE A |
| I (1:1) | Yes | plastic-rubbery | rubbery | rubbery | 48 SHORE D | 65 SHORE D |
| | No | plastic-rubbery | rubbery | rubbery | 44 SHORE D | 60 SHORE D |

We can observe that in this test, none of the samples reach a hardness of at least 70 SHORE D, a value considered as a limit for an acceptable hardness in the field of treatment of stone materials. This result shows that the presence of the epoxy resin is essential for the invention.

We can also observe that the results obtained with proportions TMPTA:1,3BAC (mol:mol) equal to 1:2 and 1:1 are better than those obtained with the proportion 1:3, the absolute best results being obtained with the proportion 1:1.

It is clear that modifications and/or additions of parts or steps may be made to the composition and to the method as described heretofore, without departing from the scope of the present invention as defined by the claims.

## Claims

1. Liquid hardening composition comprising an epoxy resin, an unsaturated organic compound selected from vinyl, acrylic and methacrylic compounds with one or more functions with double bond between two carbon atoms, a nucleophilic hardening compound suitable to react both with the epoxy resin and also with the unsaturated organic compound, and selected from monoamines, diamines, triamines, amines with more than three amino functions, thiols with primary and secondary hydrogens and mercaptans with primary and secondary hydrogens, and a photo-initiator suitable to make the composition reactive to UV light, said liquid hardening composition involving three different hardening modes.

2. Composition as in claim 1, **characterized in that** said three hardening modes involve a radical cross-linking, poly-addition and a Michael addition between the unsaturated compound and the nucleophilic hardening compound.

3. Composition as in claim 1 or 2, **characterized in that** the unsaturated organic compound comprises three functions with double bond between two carbon atoms.

4. Composition as in any claim hereinbefore, **characterized in that** it provides a first quantity of hardening compound suitable to react with the unsaturated organic compound and a second quantity of hardening compound suitable to react with the epoxy resin, **in that** the first quantity of hardening compound is such that the proportion in quantity of matter (unsaturated compound):(hardening compound) is comprised between 1:0.5 and 1:2.5 (mol:mol), **and in that** the second quantity of hardening compound is such that the proportion in quantity of matter (epoxy polymer):(hardening compound) is comprised between 4:1 and 1:1.

5. Composition as in any claim hereinbefore, **characterized in that** the photo-initiator is of the radical, anionic or cationic type.

6. Method for hardening a resin, comprising the steps of:
- making available an epoxy resin in which there is diluted an unsaturated organic compound selected from vinyl compounds, acrylic compounds and methacrylic compounds with one or more functions with double bond between two carbon atoms;
- making available a nucleophilic hardening compound suitable to react both with the epoxy resin and also with the unsaturated organic compound, and selected from monoamines, diamines, triamines, amines with more than three amino functions, thiols with primary and secondary hydrogens and mercaptans with primary and secondary hydrogens;
wherein one of either the epoxy resin or the hardening compound also comprises a photo-initiator;
- mixing the hardening compound into the epoxy resin;
- subsequently subjecting said mixture to photocatalysis by means of exposure to UV light; and
- subjecting said mixture subjected to photocatalysis to thermal catalysis;
so that hardening of the epoxy resin involves three different hardening modes.

7. Method as in claim 6, **characterized in that** said three hardening modes involve a radical cross-linking, poly-addition and a Michael addition between the unsaturated compound and the nucleophilic hardening compound.

8. Method as in claim 6 or 7, **characterized in that** the mixing of the hardening compound into the epoxy resin causes an aza-Michael addition reaction between the hardening compound and the unsaturated organic compound, **in that** the step of exposure to UV light causes a radical crosslinking reaction catalyzed by UV light, **and in that** the heating step determines a thermal catalysis of a polyaddition reaction between the hardening compound and the epoxy resin.

9. Use of the composition as in any claim from 1 to 5 to treat stone material.

10. Use of the composition as in any claim from 1 to 5 to make a tool for working stone material.

11. Tool for working stone material, comprising at least a working part suitable to come into contact with the stone material, **characterized in that** said working part is made with a mixture of a composition as in any claim from 1 to 5 and inert fillers, wherein the composition acts as a bonding material of said inert fillers and is hardened.

12. Kit comprising a hardening composition as in any claim from 1 to 5, wherein the epoxy resin and the unsaturated compound are mixed together, and the hardening compound is provided separately.

## Patentansprüche

1. Flüssige Härtungszusammensetzung, umfassend ein Epoxidharz, eine ungesättigte organische Verbindung, ausgewählt aus Vinyl-, Acryl- und Methacrylverbindungen mit einer oder mehreren Funktionen mit Doppelbindung zwischen zwei Kohlenstoffatomen, eine nukleophile Härtungsverbindung, die geeignet ist sowohl mit dem Epoxidharz als auch mit der ungesättigten organischen Verbindung zu reagieren, und ausgewählt aus Monoaminen, Diaminen, Triaminen, Aminen mit mehr als drei Aminofunktionen, Thiolen mit primären und sekundären Wasserstoffatomen und Mercaptanen mit primären und sekundären Wasserstoffatomen, und einen Photoinitiator, der geeignet ist, die Zusammensetzung gegenüber UV-Licht reaktiv zu machen, wobei die flüssige Härtungszusammensetzung drei verschiedene Härtungsmechanismen involviert.

2. Zusammensetzung nach Anspruch 1, **dadurch gekennzeichnet, dass** die drei Härtungsmechanismen eine radikalische Vernetzung, eine Polyaddition und eine Michael-Addition zwischen der ungesättigten Verbindung und der nukleophilen Härtungsverbindung involvieren.

3. Zusammensetzung nach Anspruch 1 oder 2, **dadurch gekennzeichnet, dass** die ungesättigte organische Verbindung drei Funktionen mit Doppelbindung zwischen zwei Kohlenstoffatomen umfasst.

4. Zusammensetzung nach einem der vorhergehenden Ansprüche, **dadurch gekennzeichnet, dass** sie eine erste Menge an Härtungsverbindung, die geeignet ist mit der ungesättigten organischen Verbindung zur reagieren, und eine zweite Menge an Härtungsverbindung, die geeignet ist mit dem Epoxidharz zu reagieren, bereitstellt, **dass** die erste Menge an Härtungsverbindung so ist, dass das Stoffmengenverhältnis (ungesättigte Verbindung):(Härtungsverbindung) zwischen 1:0.5 und 1:2.5 (mol:mol) umfasst ist, **und dass** die zweite Menge an Härtungsverbindung so ist, dass das Stoffmengenverhältnis (Epoxidpolymer):(Härtungsverbindung) zwischen 4:1 und 1:1 umfasst ist.

5. Zusammensetzung nach einem der vorhergehenden Ansprüche, **dadurch gekennzeichnet, dass** der Photoinitiator vom radikalischen, anionischen oder kationischen Typ ist.

6. Verfahren zum Härten eines Harzes, umfassend die Schritte von:
- Bereitstellen eines Epoxidharzes, in dem eine ungesättigte organische Verbindung verdünnt ist, ausgewählt aus Vinyl-, Acryl- und Methacrylverbindungen mit einer oder mehreren Funktionen mit Doppelbindung zwischen zwei Kohlenstoffatomen;
- Bereitstellen einer nukleophilen Härtungsverbindung, die geeignet ist sowohl mit dem Epoxidharz als auch mit der ungesättigten organischen Verbindung zu reagieren, und ausgewählt aus Monoaminen, Diaminen, Triaminen, Aminen mit mehr als drei Aminofunktionen, Thiolen mit primären und sekundären Wasserstoffatomen und Mercaptanen mit primären und sekundären Wasserstoffatomen; wobei entweder das Epoxidharz oder die Härtungsverbindung einen Photoinitiator enthält;
- Mischen der Härtungsverbindung in das Epoxidharz;
- anschließendes Unterziehen des Gemischs einer Photokatalyse durch Bestrahlung mit UV-Licht; und
- Unterziehen des photokatalysierten Gemischs einer thermischen Katalyse; so, dass die Aushärtung des Epoxidharzes drei verschiedene Härtungsmechanismen involviert.

7. Verfahren nach Anspruch 6, **dadurch gekennzeichnet, dass** die drei Härtungsmechanismen eine radikalische Vernetzung, eine Polyaddition und eine Michael-Addition zwischen der ungesättigten Verbindung und der nukleophilen Härtungsverbindung involvieren.

8. Verfahren nach Anspruch 6 oder 7, **dadurch gekennzeichnet, dass** das Mischen der Härtungsverbindung in das Epoxidharz eine Aza-Michael-Additionsreaktion zwischen der Härtungsverbindung und der ungesättigten organischen Verbindung bewirkt, **dass** der Schritt der Bestrahlung mit UV-Licht eine durch UV-Licht katalysierte radikalische Vernetzungsreaktion bewirkt und dass der Erhitzungsschritt eine thermische Katalyse einer Polyadditionsreaktion zwischen der Härtungsverbindung und dem Epoxidharz bewirkt.

9. Verwendung der Zusammensetzung nach einem der Ansprüche 1 bis 5 zur Behandlung von Steinmaterial.

10. Verwendung der Zusammensetzung nach einem der Ansprüche 1 bis 5 zur Herstellung eines Werkzeugs zur Bearbeitung von Steinmaterial.

11. Werkzeug zur Bearbeitung von Steinmaterial, umfassend mindestens einem Arbeitsbereich, der geeignet ist, mit dem Steinmaterial in Kontakt zu kommen, **dadurch gekennzeichnet, dass** der Arbeitsbereich aus einer Mischung aus einer Zusammensetzung gemäß einem der Ansprüche 1 bis 5 und inerten Füllstoffen hergestellt ist, wobei die Zusammensetzung als Bindemittel für die inerten Füllstoffe dient und ausgehärtet ist.

12. Kit, umfassend eine Härtungszusammensetzung gemäß einem der Ansprüche 1 bis 5, wobei das Epoxidharz und die ungesättigte Verbindung miteinander gemischt sind und die Härtungsverbindung separat bereitgestellt ist.

## Revendications

1. Composition de durcissement liquide comprenant une résine époxy, un composé organique insaturé choisi parmi des composés vinyliques, des composés acryliques et des composés méthacryliques comportant une ou plusieurs fonctions à double liaison entre deux atomes de carbone, un composé de durcissement nucléophile apte à réagir à la fois avec la résine époxy et également avec le composé organique insaturé, et choisi parmi des monoamines, des diamines, des triamines, des amines comportant plus de trois fonctions amine, des thiols comportant des hydrogènes primaires et secondaires et des mercaptans comportant des hydrogènes primaires et secondaires, et un photo-initiateur apte à rendre la composition réactive à la lumière UV, ladite composition de durcissement liquide mettant en œuvre trois modes de durcissement différents.

2. Composition selon la revendication 1, **caractérisée en ce que** lesdits trois modes de durcissement mettent en œuvre une réticulation radicalaire, une polyaddition et une addition de Michael entre le composé insaturé et le composé de durcissement nucléophile.

3. Composition selon la revendication 1 ou 2, **caractérisée en ce que** le composé organique insaturé comprend trois fonctions à double liaison entre deux atomes de carbone.

4. Composition selon l'une quelconque des revendications précédentes, **caractérisée en ce qu'**elle prévoit une première quantité de composé de durcissement apte à réagir avec le composé organique insaturé et une seconde quantité de composé de durcissement apte à réagir avec la résine époxy, **en ce que** la première quantité de composé de durcissement est telle que la proportion en quantité de matière (composé insaturé):(composé de durcissement) est comprise entre 1:0.5 et 1:2.5 (mol:mol), et **en ce que** la seconde quantité de composé de durcissement est telle que la proportion en quantité de matière (polymère époxy):(composé de durcissement) est comprise entre 4:1 et 1:1.

5. Composition selon l'une quelconque des revendications précédentes, **caractérisée en ce que** le photo-initiateur est de type radicalaire, anionique ou cationique.

6. Procédé de durcissement d'une résine, comprenant les étapes consistant à :
- mettre à disposition une résine époxy dans laquelle est dilué un composé organique insaturé choisi parmi des composés vinyliques, des composés acryliques et des composés méthacryliques comportant une ou plusieurs fonctions à double liaison entre deux atomes de carbone;
- mettre à disposition un composé de durcissement nucléophile apte à réagir à la fois avec la résine époxy et également avec le composé organique insaturé, et choisi parmi des monoamines, des diamines, des triamines, des amines comportant plus de trois fonctions amine, des thiols comportant des hydrogènes primaires et secondaires et des mercaptans comportant des hydrogènes primaires et secondaires;
lequel l'une de la résine époxy ou du composé de durcissement comprend également un photo-initiateur;
- mélange du composé de durcissement dans la résine époxy;
- soumettre ensuite ledit mélange à une photocatalyse par exposition à la lumière UV; et
- soumettre ledit mélange soumis à la photocatalyse à une catalyse thermique; de sorte que le durcissement de la résine époxy mette en œuvre trois modes de durcissement différents.

7. Procédé selon la revendication 6, **caractérisé en ce que** lesdits trois modes de durcissement mettent en œuvre une réticulation radicalaire, une polyaddition et une addition de Michael entre le composé insaturé et le composé de durcissement nucléophile.

8. Procédé selon la revendication 6 ou 7, **caractérisé en ce que** le mélange du composé de durcissement dans la résine époxy provoque une réaction d'addition aza-Michael entre le composé de durcissement et le composé organique insaturé, **en ce que** l'étape d'exposition à la lumière UV provoque une réaction de réticulation radicalaire catalysée par la lumière UV, et **en ce que** l'étape de chauffage détermine une catalyse thermique d'une réaction de polyaddition entre le composé de durcissement et la résine époxy.

9. Utilisation de la composition selon l'une quelconque des revendications 1 à 5 pour traiter un matériau en pierre.

10. Utilisation de la composition selon l'une quelconque des revendications 1 à 5 pour réaliser un outil pour le travail du matériau en pierre.

11. Outil pour le travail du matériau en pierre, comprenant au moins une partie active apte à entrer en contact avec le matériau en pierre, **caractérisé en ce que** ladite partie active est réalisée avec un mélange d'une composition selon l'une quelconque des revendications 1 à 5 et de charges inertes, lequel la composition agit comme matériau de liaison desdites charges inertes et est durcie.

12. Kit comprenant une composition de durcissement selon l'une quelconque des revendications 1 à 5, lequel la résine époxy et le composé insaturé sont mélangés ensemble, et le composé de durcissement est fourni séparément.
